# EUROPÄISCHE PATENTANMELDUNG

(11) **EP 0 555 720 A1**
(43) Veröffentlichungstag der Anmeldung: **18.08.1993**
(21) Anmeldenummer: 93101508.5
(22) Anmeldetag: 01.02.1993
(51) Int. Cl.: H02K 5/22

(54) **Elektrische Maschine**

(30) Priorität: 14.02.1992 DE 4204478
(71) Anmelder: SIEMENS AKTIENGESELLSCHAFT, D-80333 München (DE)
(72) Erfinder: Nothnagel, Klaus-Peter, W-8740 Bad Neustadt (DE); Hellmuth, Karin, W-8740 Bad Neustadt (DE); Fiedler, Arthur, Dipl.-Ing., W-8741 Wollbach (DE); Vojta, Erich, W-8551 Hemhofen (DE)

(57) **Zusammenfassung**

Die Erfindung betrifft eine elektrische Maschine, deren Ständerwicklung mit den in einem an dem Maschinengehäuse (1) vorgesehenen Klemmenkasten (2) angeordneten Netzanschlußklemmen (4) verbunden ist. Eine Vereinfachung des Anschlusses der Ständerwicklung an die Netzanschlußklemmen wird dadurch erreicht, daß die entsprechenden, gegeneinander und gegenüber metallischen Maschinenteilen isolierten Wicklungsdrähte (7) der Ständerwicklung die Wicklungsenden (6) der Ständerwicklung bilden und jeweils unmittelbar mit einem mit den Netzanschlußklemmen (4) verbindbaren Anschlußstück (10) verbunden sind.

## Beschreibung

Die Erfindung betrifft eine elektrische Maschine gemäß dem Oberbegriff des Anspruchs 1.

Eine solche Maschine ist durch die DE-C-31 42 151 bekannt. Bei dieser Maschine sind die eigentlichen Wicklungsenden der Ständerwicklung jeweils mit einer isolierten mehrdrähtigen Leitung verbunden, die ihrerseits an die entsprechende im Klemmenkasten der Maschine vorgesehene Netzanschlußklemme angeschlossen ist. Derartige Leitungen werden an den Wicklungsdraht der Ständerwicklung angelötet und zur mechanischen Sicherung in die Ständerwicklung eingebunden. An dem freien Ende der Leitung ist ein mit der Netzanschlußklemme verbindbarer Kabelschuh vorgesehen.

Der Erfindung liegt die Aufgabe zugrunde, den Anschluß der Ständerwicklung an die Netzanschlußklemmen zu vereinfachen.

Die Lösung der gestellten Aufgabe gelingt durch die im Kennzeichen des Anspruchs 1 angegebenen Merkmale. Durch das direkte Verbinden der Wicklungsenden mit den Netzanschlußklemmen entfällt der Arbeitsaufwand für das Anschließen der ansonsten üblichen gesonderten Anschlußleitungen.

Das Verbinden der relativ dünnen Drähte der Wicklungsenden mit dem Anschlußstück ist auf einfache Weise dadurch möglich, daß an dem Anschlußstück ein U-förmig ausgebildetes Anklemmteil vorgesehen ist, zwischen dessen U-Schenkeln die freien Enden der Wicklungsenden festklemmbar sind. Zur Sicherung der elektrischen Leitfähigkeit zwischen den Drähten und dem Anschlußstück ist es zweckmäßig, das freie Ende des jeweiligen Wicklungsendes mit dem betreffenden Anschlußstück zu verschweißen und/oder zu verlöten.

Eine sehr wirksame Isolierung der Wicklungsenden wird durch das Aufstecken eines Isolierschlauches erreicht. Wird der Isolierschlauch an einem an dem Anschlußstück vorgesehenen Halteteil gesichert, so ist damit auch ein Schutz gegen mechanische Belastung der Wicklungsenden gegeben. Die Wicklungsenden können somit zum Beispiel von einer Belastung durch Zugkräfte freigehalten werden. Zweckmäßigerweise wird der Isolierschlauch mittels einer Crimpverbindung an dem Halteteil gesichert.

Anhand eines in der Zeichnung dargestellten Ausführungsbeispieles wird der Anmeldungsgegenstand nachfolgend näher beschrieben. Es zeigt:
- FIG 1: in schematischer Darstellung eine Stirnansicht eines Ständers einer elektrischen Maschine,
- FIG 2: ein an einem Wicklungsende der Ständerwicklung angeordnetes Anschlußstück in vergrößerter perspektivischer Darstellung.

Mit 1 ist das Gehäuse einer elektrischen Maschine bezeichnet, an dem das durch einen nicht dargestellten Klemmenkastendeckel verschließbare Basisteil 2 eines Klemmenkastens angebaut ist. In dem Basisteil 2 ist ein Klemmbrett 3 angeordnet, das mit die Anschlußklemmen bildenden Stehbolzen 4 versehen ist. Die aus dem Wickelkopf 5 der Ständerwicklung heraustretenden Wicklungsenden 6 werden von dem Wicklungsdraht 7 der Ständerwicklung gebildet und sind direkt zu dem im Klemmenkasten angeordneten Klemmbrett 3 geführt. Als Isolierung ist auf den Wicklungsdraht 7 ein Isolierschlauch 8 aufgesteckt.

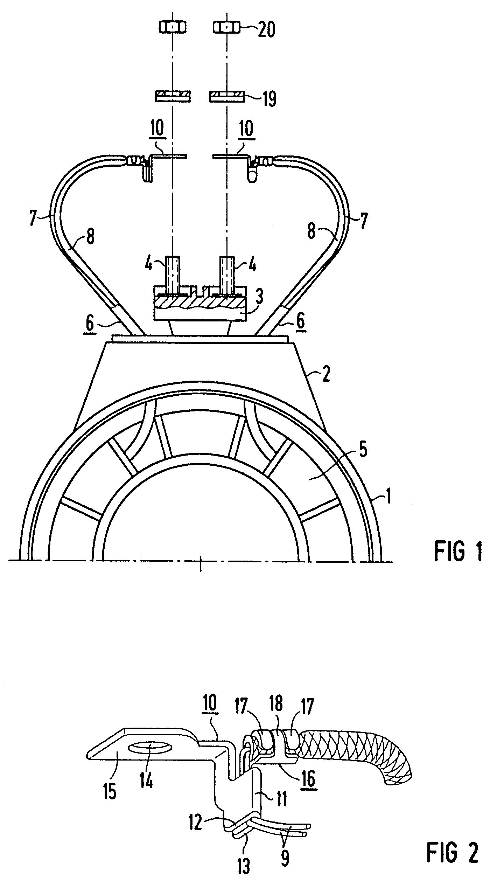

Das freie Drahtende 9 jedes Wicklungsdrahtes 7 ist, wie insbesondere aus FIG 2 deutlich erkennbar, mit einem Anschlußstück 10 verbunden. Das Anschlußstück 10 weist einen Anklemmteil 11 auf, der U-förmig ausgebildet ist. Das freie Drahtende 9 ist zwischen die beiden U-Schenkel 12 und 13 des Anklemmteiles 11 eingefügt. Die beiden U-Schenkel 12 und 13 werden nach dem Einfügen des oder der Drahtenden 9 entsprechend zusammengedrückt und somit die Drahtenden 9 festgeklemmt. Die Drahtenden können auch noch zusätzlich mit dem Anklemmteil 11 verschweißt und/oder verlötet werden.

Das Anschlußstück 10 weist ferner noch eine mit einer Aufsteckbohrung 14 versehene Anschlußlasche 15 und ein Halteteil 16 auf. Das Anschlußstück 10 kann vorteilhafter Weise als einteiliges Stanz-Biegeteil ausgebildet sein.

An dem Halteteil 16 sind Crimparme 17 und 18 ausgebildet, welche das Ende des auf den Wicklungsdraht 7 aufgesteckten Isolierschlauches 8 beschädigungsfrei umfassen und somit den Isolierschlauch 8 an dem Anschlußstück 10 festlegen. Damit werden mechanische Kräfte, insbesondere auf die Wicklungsenden 6 ausgeübte Zugkräfte im wesentlichen von dem Isolierschlauch 8 aufgenommen und damit der Wicklungsdraht 7 entsprechend entlastet. Vorteilhaft ist ferner, daß der Füllgrad des Isolierschlauches 8 variabel ist.

Der elektrische Anschluß der Wicklungsdrähte 7 erfolgt durch ein Aufstecken der Anschlußlasche 15 des Anschlußstückes 10 auf den entsprechenden Stehbolzen 4. Mittels einer Anschlußscheibe 19 und einer Mutter 20 wird die Anschlußlasche 15 fest mit dem Stehbolzen 4 bzw. mit dem Netzleiter verbunden.

## Patentansprüche

1. Elektrische Maschine, deren Ständerwicklung mit den in einem an dem Maschinengehäuse (1) vorgesehenen Klemmenkasten (2) angeordneten Netzanschlußklemmen (4) verbunden ist, **dadurch gekennzeichnet**,
daß die entsprechenden, gegeneinander und gegenüber metallischen Maschinenteilen isolierten Wicklungsdrähte (7) der Ständerwicklung die Wicklungsenden (6) der Ständerwicklung bilden und jeweils unmittelbar mit einem mit den Netzanschlußklemmen (4) verbindbaren Anschlußstück (10) verbunden sind.

2. Elektrische Maschine nach Anspruch 1,
**dadurch gekennzeichnet**,
daß an dem Anschlußstück (10) ein U-förmig ausgebildetes Anklemmteil (11) vorgesehen ist, zwischen dessen U-Schenkeln (12 und 13) die freien Enden (9) der Wicklungsdrähte (7) festklemmbar sind.

3. Elektrische Maschine nach Anspruch 1 oder 2,
**dadurch gekennzeichnet**,
daß das freie Ende (9) jedes Wicklungsdrahtes (7) mit dem betreffenden Anschlußstück (10) verschweißt und/oder verlötet ist.

4. Elektrische Maschine nach Anspruch 1, 2 oder 3,
**dadurch gekennzeichnet**,
daß auf jeden Wicklungsdraht (7) ein Isolierschlauch (8) aufgesteckt ist.

5. Elektrische Maschine nach Anspruch 4,
**dadurch gekennzeichnet**,
daß an dem Anschlußstück (10) ein den Isolierschlauch (8) sicherndes Halteteil (16) vorgesehen ist.

6. Elektrische Maschine nach Anspruch 5,
**dadurch gekennzeichnet**,
daß das Halteteil (16) als Crimpteil ausgebildet ist.

7. Elektrische Maschine nach einem oder mehreren der vorhergehenden Ansprüche,
**dadurch gekennzeichnet,**
daß das Halteteil (16) den Isolierschlauch (8) unabhängig vom jeweiligen Füllgrad beschädigungsfrei umfaßt und festklemmt.
